# EUROPÄISCHE PATENTANMELDUNG

(11) **EP 3 520 730 A1**
(43) Veröffentlichungstag der Anmeldung: **07.08.2019**
(21) Anmeldenummer: 18154910.6
(22) Anmeldetag: 02.02.2018
(51) Int. Cl.: A61C 8/00

(54) **HALTEEINRICHTUNG FÜR ZAHNERSATZELEMENTE**

(71) Anmelder: VITA-ZAHNFABRIK H. Rauter GmbH & Co. KG, 79713 Bad Säckingen (DE)
(72) Erfinder: Schöne, André, 79713 Bad Säckingen (DE)
(74) Vertreter: dompatent von Kreisler Selting Werner - Partnerschaft von Patent- und Rechtsanwälten mbB

(57) **Zusammenfassung**

Eine Halteeinrichtung für Zahnersatzelemente (14) weist ein Implantat (10) und ein Zwischenelement (12) auf. Das Implantat (10) ist vorzugsweise durch Verschrauben in einem Kieferknochen (22) fixiert. Das Implantat (10) weist einen Implantatschaft (16) sowie einen Implantatkopf (25) auf. Der Implantatschaft (16) ragt über den Kieferknochen (22) hinaus in das Zahnfleisch (42). Mit dem Implantatkopf (25) ist ein Zwischenelement (12) verbunden. Das Zwischenelement (12) ist im Wesentlichen innerhalb des Zahnfleisches angeordnet und dient zur Aufnahme eines Zahnersatzelements (14). In einer Ausführungsform ist das Zwischenelement aus einem elastischen Material hergestellt. In einer anderen Ausführungsform weist der Implantatkopf einen Ansatz auf, der in eine Ausnehmung des Zwischenelements ragt. In einer weiteren Ausführungsform weist die Halteeinrichtung eine Schraube mit einem Kopf auf, wobei die Unterseite des Kopfes eine Einbuchtung aufweist.

## Beschreibung

Die Erfindung betrifft eine Halteeinrichtung für Zahnersatzelemente.

Zur Zahnrestauration ist es bekannt, Implantate im Kieferknochen zu fixieren. Mit dem Zahnimplantat wird sodann ein Zahnersatzelement, wie eine Krone, eine Brücke oder dergleichen, verbunden. Das Implantat wird zunächst in den Kieferknochen eingebracht, wobei es beispielsweise bekannt ist, das Implantat in den Kieferknochen einzuschrauben. Nach dem Anordnen des Implantats im Kieferknochen wird das Zahnfleisch des Patienten teilweise oder vollständig verschlossen, so dass eine Einheilung des Implantats erfolgt. Sobald das Implantat durch Einheilung fest in dem Knochen verankert ist, wird auf das Implantat die dentale Krone oder dergleichen aufgesetzt. Dies erfolgt derart, dass in einer Öffnung der Krone üblicherweise Zement vorgesehen wird und sodann die Krone oder dergleichen auf einen am Implantat vorgesehenen Ansatz aufgesetzt wird. Um ein sicheres Verbinden zu gewährleisten, muss ein Überschuss an Zement in der Ausnehmung der Krone vorgesehen werden. Dies führt dazu, dass der überschüssige Zement seitlich herausgedrückt wird und entfernt werden muss. Durch verbleibende Zementüberschüsse am unteren Kronenrand kann eine Reizung des Zahnfleisches auftreten. Anstatt Zement können auch andere Verbindungsmaterialien verwendet werden, wobei hierbei dieselbe Problematik besteht.

Ferner sind Halteeinrichtungen für Zahnersatzelemente mit einem zweiteiligen Implantat bekannt. Ein üblicherweise aus Titan hergestelltes Implantat wird wiederum im Kieferknochen angeordnet, wobei eine Oberseite des Implantats mit der Oberseite des Kieferknochens in eingesetztem Zustand abschließt. Auch dieses Implantat muss zunächst in den Kieferknochen eingebracht werden und dort einheilen. Das zweiteilige Implantat weist im Inneren eine Bohrung mit Gewinde auf, in die, nachdem das Implantat in dem Kieferknochen eingewachsen ist, ein zweites Implantatteil eingeschraubt wird. Mit diesem zweiten Implantatteil, das innerhalb des Zahnfleisches angeordnet ist, wird sodann die Krone oder dergleichen verbunden. Das zweite Implantatteil kann hierbei unterschiedlich ausgebildet sein, so dass beispielsweise die Zahnfleischhöhe bzw. die unterschiedliche Papillenhöhe bei Frontzähnen oder bei Seitenzähnen berücksichtigt werden kann. Ein derartiges zweiteiliges Implantat weist jedoch den Nachteil auf, dass zwischen den beiden Implantatteilen konstruktiv bedingt ein noch so kleiner Spalt bleibt. Hier können durch Kaubewegungen im Implantatsystem Mikrobewegungen auftreten, die die Stabilität verringern. Insbesondere besteht hierbei jedoch die Gefahr, dass Bakterien am Rand des Spalts und / oder am Außengewinde zwischen Implantat und Knochen eindringen und tief in den Knochen wandern.

Aufgabe der Erfindung ist es, eine Halteeinrichtung für Zahnelemente zu schaffen, bei der die Gefahr von Irritationen durch Zement oder dergleichen verringert und gleichzeitig auch die Gefahr des Eindringens von Bakterien verringert ist.

Die Lösung der Aufgabe erfolgt erfindungsgemäß durch eine Halteeinrichtung für Zahnersatzelemente gemäß Anspruch 1.

Die erfindungsgemäße Halteeinrichtung für Zahnersatzelemente wie Kronen, künstliche Zähne und dergleichen weist ein Implantat zur Fixierung in einem Kieferknochen auf. Die Fixierung erfolgt hierbei insbesondere durch Einschrauben in den Kieferknochen. Das Implantat weist einen Implantatschaft zur Anordnung in dem Kieferknochen und einen Implantatkopf zur Anordnung im Zahnfleisch auf. Der Implantatkopf steht somit in eingesetztem Zustand über den Kieferknochen vor. Nach dem Einheilen des Implantats muss somit das Zahnfleisch nicht bis zur Knochenoberfläche geöffnet werden. Das Eindringen von Bakterien in diesen Bereich ist somit vermieden. Mit dem Implantatkopf ist erfindungsgemäß ein Zwischenelement verbunden. Das Zwischenelement dient zur Aufnahme des Zahnersatzelementes. Das Zwischenelement ist erfindungsgemäß derart ausgebildet, dass es zumindest im Wesentlichen innerhalb des Zahnfleisches angeordnet ist. Das Zwischenelement kann jedoch auch geringfügig über das Zahnfleisch vorstehen. Dies ist insofern möglich, da es in bevorzugter Ausführungsform möglich ist, das Zwischenelement einzufärben bzw. aus eingefärbtem Material herzustellen.

In besonders bevorzugter Ausführungsform erfolgt das Verbinden des Zwischenelements mit dem Implantat, insbesondere dem Implantatkopf mit Hilfe eines Fixierelements wie einer Schraube, so dass in diesem Bereich keine Zementreste oder andere Klebemittelreste eine Irritierung des Zahnfleisches hervorrufen können. Die Verbindung des Zahnersatzelements mit dem Zwischenelement kann sodann durch Verkleben insbesondere mittels Zement oder einem anderen Klebemittel erfolgen. Die hierbei gegebenenfalls austretenden Zement- oder Klebemittelreste treten in einem Bereich auf, der nur geringfügig unterhalb der Oberseite des Zahnfleisches angeordnet ist. Insofern ist es auf einfache Art und Weise möglich entsprechende Zement- und/oder Klebmittelreste rückstandsfrei und glatt zu entfernen, so dass eine spätere ständige Irritation des Zahnfleisches vermieden ist.

In besonders bevorzugter Ausführungsform weist das Zwischenelement ein Material mit größerer Elastizität als das Implantat und/oder als das Zahnersatzelement auf. Insbesondere ist das Zwischenelement aus einem Material mit entsprechend größerer Elastizität hergestellt. Aufgrund des Verwendens eines derartigen Materials wirkt das Zwischenelement als eine Art Dämpfungselement. Bei natürlichen Zähnen ist die Zahnwurzel elastisch im Kieferknochen gehalten, so dass der Zahn gegenüber dem Kieferknochen geringfügig bewegbar ist. Dies ist bei künstlichen Zähnen nicht der Fall, da das Implantat fest im Kieferknochen verankert ist. Dies kann bei künstlichen Zähnen dazu führen, dass bei starken Belastungen Abplatzungen bei dem Zahnersatzelement wie der Krone oder der Brücke auftreten. Durch die bevorzugte erfindungsgemäße Ausgestaltung des Zwischenelements aus einem Material mit zumindest etwas größerer Elastizität als das Implantat und/oder das Zahnersatzelement können derartige Abplatzungen vermieden werden und der künstliche Zahn weist Eigenschaften auf, die dem natürlichen Zahn sehr ähnlich sind.

Vorzugsweise weist das Zwischenelement dentalen Kunststoff und/oder dentale Keramik auf bzw. ist aus derartigen Materialien hergestellt. Insbesondere kann für das Zwischenelement auch poröse mit Kunststoff infiltrierte Keramik verwendet werden.

Besonders geeignet als Material für das Zwischenelement ist das unter dem Namen VITA ENAMIC® vertriebene Material.

Insbesondere ist es bevorzugt, dass Zwischenelement aus Material herzustellen, das beschleifbar ist. Beschleifbar meint in diesem Zusammenhang, dass das Zwischenelement vor dem Einsetzen an die anatomische Situation angepasst werden kann. Bei dem erfindungsgemäß verwendeten Material ist das Beschleifen aufgrund der Materialeigenschaften in wesentlich größerem Umfang als bei anderen Materialien wie Zirkonoxid oder Titan möglich. Das erfindungsgemäß verwendete Material weist insbesondere den Vorteil auf, dass durch das Beschleifen keine Beeinträchtigung des Materials, insbesondere der Materialzusammensetzung, erfolgt bzw. das Risiko einer entsprechenden Beeinträchtigung sehr gering ist. Beispielsweise wird zur Anpassung der Form der rotationssystemtische Formkörper des Zwischenelements in der Höhe (Marginline der Krone) oder der mesial/distal Ausdehnung oder palatinale/labiale Ausdehnung anpassen. Der Vorteil eines beschleifbaren Zwischenelements ist, dass die Situation im Mund nach der Einheilung individuelloptimal für die Insertation des Zahnrestaurationsaufbaus vorbereitet werden kann. In einem Sonderfall könne der Zahnarzt sogar ausnahmsweise im Mund des Patienten durch Schleifen kleinere nachträgliche Formkorrekturen am künstlichen Zwischenelement vornehmen. Ein nachträgliches Beschleifen von bereits im Patientenmund vorhandenem Implantatmaterial wird im bisherigen Stand der Technik, bei dem üblicherweise Titan oder Zirkonoxid zum Einsatz kommt, nur in geringem Maße zugelassen.

Das vorzugsweise für das Zwischenelement verwendete Material weist insbesondere eine Biegefestigkeit von 130-360 MPa, insbesondere von 150 - 160 bzw. 250-350 MPa und einen Elastizitätsmodul von 20-45 GPa auf. Das bevorzugte Material VITA ENAMIC IS hat eine Biegefestigkeit von 150-160 MPa und ein Elastizitätsmodul von ca. 30 GPa.Implantatgetragene Molarenkronen aus VITA ENAMIC IS auf L-TiBase Klebebasen und Straumann bone Level Implantatsystem hielten in einem statischen Bruchlasttest einer Belastung von im Mittel ca. 926 N stand. Im Vergleich zur mittleren maximalen Kaukraft von etwa 490 N und Maximalwerten von 725 N erreichten die untersuchten Molarenkronen ein höheres Belastungsniveau. In einem dynamischen Bruchlasttest wurden 14 VITA ENAMIC Kronen im Kausimulator getestet. Die Kronen wurden nach dem Ätzen auf Komposit-Stümpfen (E-Modul ca. 18 GPa) mit Variolink II (Ivoclar Vivadent) zementiert, in Technovit 4000 (Heraeus Kulzer) eingebettet und in 37°C warmem Wasser für 24 Stunden gelagert. Die Kronen wurden nach dem Auslagern in dem Kausimulator zyklisch belastet: 198 N Last, 1,2 Millionen Zyklen, 1,6 Hz Frequenz, 3 mm Steatitkugel als Antagonist, TC 5 - 55 °C. Keine der VITA ENAMIC Kronen zeigte während der dynamischen Kaubelastung Fehler (siehe: Universitätsklinikum für Zahn-, Mund- und Kieferheilkunde Freiburg, Abtlg. Für Zahnärztliche Prothetik, Dr. Asma Bilkhair, Bericht 12/11 ([2], vgl. S. 34)).

Bei einer bevorzugten Weiterbildung der Erfindung weist der Implantatkopf einen Ansatz auf, der in eine Ausnehmung des Zwischenelements ragt. Hierdurch ist eine gute Fixierung, insbesondere eine formschlüssige Fixierung zwischen dem Zahnersatzelement und dem Implantat möglich.

Der Ansatz des Implantatkopfes ist vorzugsweise derart ausgebildet, dass er von dem Zwischenelement insbesondere seitlich umgeben ist. Insbesondere erfolgt ein vollständiges seitliches Umgeben des Ansatzes durch das Zwischenelement. Die Ausnehmung an dem Zwischenelement ist in besonders bevorzugter Ausführungsform derart ausgebildet, dass diese ausschließlich eine in Richtung des Implantats weisende Öffnung aufweist, in die sodann der Ansatz eingesteckt wird.

In besonders bevorzugter Ausführungsform ist der im Kieferknochen angeordnete Implantatschaft rotationssymmetrisch. Der mit dem Implantatkopf verbundene Ansatz muss nicht rotationssymmetrisch sein, sondern ist in besonders bevorzugter Ausführungsform nicht rotationssymmetrisch ausgebildet. Der Implantatschaft weist in weiterer bevorzugter Ausführungsform an einer Außenseite ein Gewinde auf. Hierdurch ist es möglich, das Implantat durch Einschrauben im Knochen zu befestigen. Insofern ist ein nicht rotationssymmetrischer Implantatkopf oder Ansatz bevorzugt, da der Implantatkopf bzw. Ansatz sodann gleichzeitig zur Aufnahme eines Werkzeugs bzw. zum Verbinden mit einem Werkzeug dienen kann. Der Ansatz hat somit neben der Funktion des Verbindens mit dem Zwischenelement auch die Funktion eines Werkzeugansatzes.

Die in dem Zwischenelement vorgesehene Ausnehmung ist in besonders bevorzugter Ausführungsform kongruent zu dem Ansatz des Implantats. Da in besonders bevorzugter Ausführungsform der Ansatz nicht rotationssymmetrisch ist, ist auch die kongruent ausgebildete Ausnehmung vorzugsweise nicht rotationssymmetrisch. Hierdurch ist ein Formschluss sichergestellt, so dass ein Verdrehen des Zwischenelements auf dem Implantatkopf vermieden ist.

Bei einer weiteren bevorzugten Ausführungsform weist das Zwischenelement einen insbesondere umlaufenden Kragen auf. Der Kragen weist eine vorzugsweise ebene Unterseite auf. Diese Unterseite liegt insbesondere flächig an einem Ansatz des Implantatkopfes auf. Der Ansatz ist vorzugsweise ringförmig ausgebildet. Durch eine derartige insbesondere flächige Auflage zwischen dem Zwischenelement und dem Implantatkopf kann eine spielfreie Verbindung hergestellt werden. Dies weist insbesondere den Vorteil auf, dass keine Mikrobewegungen auftreten, die ein Lösen der Verbindung zwischen dem Zwischenelement und dem Implantat bewirken könnten.

Bei einer weiteren besonders bevorzugten Ausführungsform der Erfindung sind der Implantatkopf und das Zwischenelement mittels eines Fixierelements miteinander verbunden. Das Fixierelement ist vorzugsweise derart angeordnet, dass es zu einer axialen Fixierung dient. Hierbei kann das Fixierelement stiftförmig ausgebildet sein und beispielsweise in eine Öffnung ragen, wobei die Öffnung vorzugsweise am Implantat, insbesondere am Ansatz des Implantatkopfes, vorgesehen ist. Das Fixierelement ist beispielsweise stiftförmig ausgebildet und weist Rastnasen oder Rastelemente auf. Insbesondere kann ein derartig stiftartig ausgebildetes Fixierelement fest mit dem Zwischenelement verbunden oder einstückig mit diesem ausgebildet sein.

Insbesondere ist die Öffnung zur Aufnahme des Fixierelements am Ansatz des Implantatkopfes derart angeordnet, dass die Öffnung an einer Oberseite des Implantatkopfes, die in Richtung des Zwischenelements weist, offen ist. Da das Fixierelement in bevorzugter Ausführungsform zur axialen Fixierung des Zwischenelements dient, ist für eine radiale Fixierung, um ein Verdrehen des Zwischenelements zu vermeiden, vorzugsweise ein weiteres Fixierelement vorgesehen. Dies kann bei einer nicht rotationssymmetrischen Ausgestaltung des Ansatzes sowie der Ausnehmung entfallen, da bereits hierdurch eine rotatorische Fixierung erfolgt.

In besonders bevorzugter Weiterbildung der Erfindung handelt es sich bei dem Fixierelement um ein gesondertes Bauteil. Dieses kann mit dem Zwischenelement verbunden werden. Insbesondere weist das Zwischenelement eine Bohrung auf, in der das Fixierelement teilweise angeordnet ist. Hierbei kann es sich wiederum um ein stiftartiges Fixierelement handeln, das mit dem Zwischenelement durch eine Rastverbindung oder dergleichen verbunden wird.

Besonders bevorzugt ist die Bohrung in dem Zwischenelement als Durchgangsbohrung ausgebildet, durch die das Fixierelement hindurch gesteckt werden kann. Die Fixierung des Fixierelements erfolgt sodann im Implantatkopf, insbesondere im Ansatz des Implantatkopfes. Beispielsweise kann es sich bei dem Fixierelement um eine Schraube handeln, die in den Implantatkopf, insbesondere den Ansatz des Implantatkopfes, eingeschraubt wird und hierdurch das Zwischenelement axial fixiert.

Da das Zwischenelement in besonders bevorzugter Ausführungsform aus einem Material hergestellt ist, das eine gewisse Elastizität aufweist, kann das Zwischenelement insbesondere bei einer Fixierung durch eine Schraube geringfügig verformt bzw. zusammengedrückt werden. Dies hat insbesondere den Vorteil, dass zwischen der Auflagefläche des Implantatkopfes und einer Unterseite des Zwischenelements insbesondere einer Unterseite des Kragens des Zwischenelements eine spielfreie Verbindung realisiert ist. Hierdurch ist ein Lösen des Zwischenelements vom Implantatkopf durch Auftreten von Mikrobewegungen vermieden.

Vorzugsweise ist das Implantat und/oder das Zahnersatzelement aus Zirkonoxid hergestellt. Bei aus Zirkonoxid hergestelltem Zahnersatz handelt es sich um keramische Werkstücke mit herausragenden Materialeigenschaften hinsichtlich ihrer Bioverträglichkeit, Stabilität und Ästhetik. Dabei reicht die Einsatzbreite des Materials von konservierenden Restaurationen über Kronen und Brücken bis in die Implantatprothetik hinein. Zirkoniumdioxid (chemische Charakterisierung: ZrO₂ + HfO₂ + Y₂O₃ > 99 %) gehört zu den sogenannten Oxidkeramiken und zeigt Eigenschaften, die Metallen vergleichbar oder ihnen zum Teil sogar überlegen sind. Als Keramik ist es korrosionsfrei und zeichnet sich durch eine hohe Biegefestigkeit und Bruchzähigkeit aus.

Da das Zwischenelement in besonders bevorzugter Ausführungsform aus einem insbesondere durch Schleifen bearbeitbarem Material hergestellt ist, ist es auf einfache Weise möglich, das Zwischenelement an die Patientensituation anzupassen. Beispielsweise kann die Höhe des Zwischenelements an die Zahnfleischhöhe bzw. die unterschiedliche Papillenhöhe des Patienten im entsprechenden Kieferbereich angepasst werden. Besonders im Frontzahnbereich kann das Zwischenelement bei der Verwendung entsprechend bearbeitet werden, was ästhetische und funktionale Vorteile mit sich bringt

Im Bereich der Seitenzähne ist der ästhetische Anspruch im Weichgewebe üblicherweise deutlich geringer als im Bereich der Frontzähne. Im Bereich der Seitenzähne ist es möglich, das Zahnersatzelement wie die Krone durch Zement oder ein anderes Klebematerial mit dem Zwischenelement zu verbinden. Diese Verbindung kann extraoral (außerhalb des Mundes) erfolgen, so dass eine vollständige Entfernung von Zement- oder Klebematerialresten auf einfache Weise erfolgen kann. Insbesondere ist dies für den Patienten deutlich angenehmer. Bevorzugt ist es hierbei, dass das Zahnersatzelement wie die Krone ebenfalls eine Durchgangsöffnung aufweist, so dass das zuvor mit dem Zwischenelement verbundene Zahnersatzelement mittels des Fixierelements wie einer Schraube zusammen mit dem Zwischenelement mit dem Ansatz des Implantatkopfes verbunden insbesondere verschraubt werden kann.

Bei Verwendung der erfindungsgemäßen Halteeinrichtung bei Frontzähnen ist es aufgrund der Angulation der Frontzähne oft nicht möglich, in dieser eine palatinale Durchgangsbohrung zur Aufnahme des Fixierelements vorzusehen. Im Frontzahnbereich ist es daher bevorzugt das Zwischenelement zunächst mit dem eingewachsenen Implantat, das heißt mit dem Implantatkopf über ein Fixierelement wie eine Schraube zu verbinden. Anschließend erfolgt ein Verbinden des Zahnersatzelementes mit Hilfe von Zement oder einem anderen Klebematerial im Mund des Patienten. Der Bereich zwischen dem Zwischenelement und dem Zahnersatzelement liegt nur geringfügig unterhalb der Oberseite des Zahnfleisches. Insbesondere liegt dieser Bereich ca. 1mm unter der Oberseite des Zahnfleisches. Insofern ist es möglich, die Zement- bzw. Klebemittelreste hier auf einfache Weise zu entfernen, so dass keine Irritation des Zahnfleisches bzw. des Knochens auftritt.

In besonders bevorzugter Ausführungsform weist das Fixierelement einen Kopf und einen Schaft auf, wobei das Fixierelement vorzugsweise als Schraube ausgebildet ist. Der Kopf des Fixierelements weist an seiner Unterseite eine Einbuchtung auf. Diese erstreckt sich insbesondere um die gesamte Unterseite, da es sich bei dem Fixierelement vorzugsweise um ein rotationssymmetrisches Bauteil handelt. Die Einbuchtung ist vorzugsweise derart ausgebildet, dass sie eine nach innen weisende schräge Fläche aufweist. Die der Unterseite des Kopfes des Fixierelements gegenüberliegende Seite des Zwischenelements ist vorzugsweise komplementär ausgebildet. Eine derartige Einbuchtung an dem Kopf des Fixierelements hat den Vorteil, dass die auftretenden Kräfte insbesondere beim Verschrauben bzw. beim Anordnen des Fixierelements nach innen gerichtet sind. Dies hat den Vorteil, dass das Zwischenelement beim Fixieren mit dem Ansatz des Implantatkopfes nicht zerstört wird. Ein derartiges Risiko besteht bei radial nach außen auftretenden Kraftkomponenten.

Nachfolgend wird die Erfindung anhand einer bevorzugten Ausführungsform unter Bezugnahme auf die anliegenden Zeichnungen näher erläutert.

Die Figur zeigt eine schematische Seitenansicht einer Halteeinrichtung mit aufgesetzter Krone in teilweise geschnittener Ansicht.

Die Halteeinrichtung weist ein Implantat 10 sowie ein Zwischenelement 12 auf, die miteinander verbunden sind. Auf das Zwischenelement 12 ist ein Zahnersatzelement 14 aufgesetzt, insbesondere aufgeklebt.

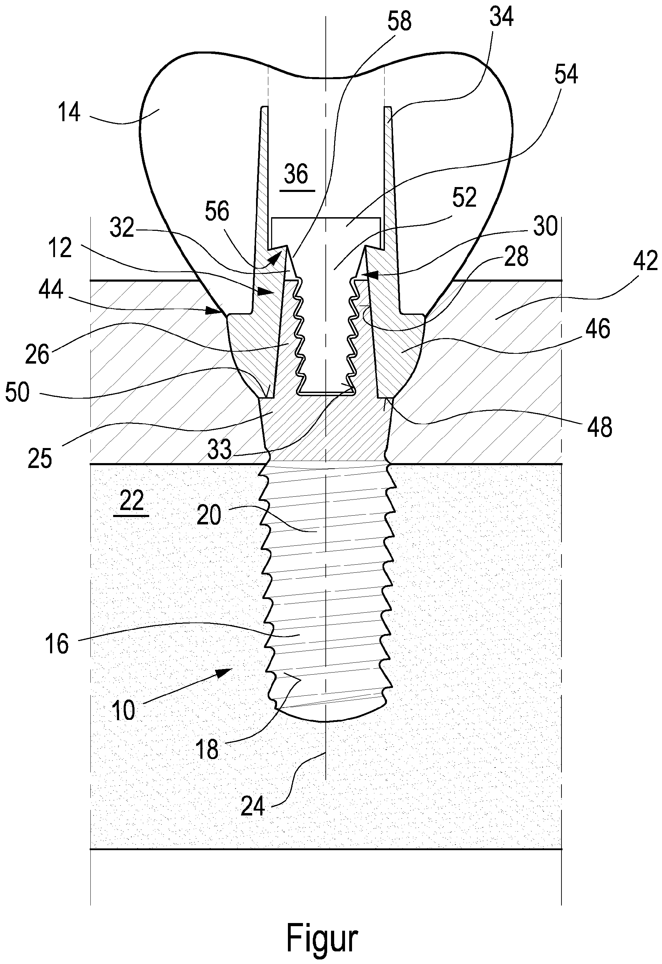

Das Implantat 10 weist einen Implantatschaft 16 auf. Dieser in Figur 1 nicht geschnitten dargestellte Teil des Implantats weist an einer Außenseite 18 ein Gewinde 20 auf. Hierdurch ist es möglich, das Implantat 10 in einem Kieferknochen 22 anzuordnen, insbesondere einzuschrauben.

An den Implantatschaft 16, der zu einer Längsachse 24 rotationssymmetrisch ausgebildet ist, schließt sich ein Implantatkopf 25 mit einem Ansatz 26 an. Dieser ist vorzugsweise nicht rotationssymmetrisch ausgebildet, sondern weist beispielsweise eine sechs- oder achteckige Ausgestaltung auf, so dass der Ansatz 26 auch als Werkzeugansatz dient, um das Implantat 10 in den Kieferknochen 22 einzuschrauben.

Das Zwischenelement 12 weist eine Ausnehmung 28 auf. Diese ist, insbesondere bezogen auf die Längsachse 24 mittig im Zwischenelement 12 angeordnet. Die Ausnehmung 28 ist vorzugsweise kongruent zur Form des Ansatzes 26 ausgebildet. Hierdurch ist ein Rotieren bzw. Verdrehen des Zwischenelements 12 auf dem in den Knochen eingebrachten Implantat vermieden.

Zum axialen Fixieren ist ein Fixierelement 30 vorgesehen, bei dem es sich im dargestellten Ausführungsbeispiel um eine Schraube handelt. Die Schraube 30 ist in einer Durchgangsbohrung 32 des Zwischenelements 12 angeordnet und in den Ansatz 26 des Implantatkopfs 25 eingeschraubt. Hierzu kann der Ansatz 26 des Implantatkopfs 25 eine Öffnung bzw. Sackbohrung 33 aufweisen, die in Richtung des Zwischenelements 12 offen ist.

Das Zwischenelement 12 weist einen der Ausnehmung 28 gegenüberliegenden Ansatz bzw. Vorsprung 34 auf. Dieser ragt in eine Ausnehmung 36 des Zahnersatzelements 14. Der Ansatz 34 und die Ausnehmung 36 sind hierbei vorzugsweise wiederum kongruent ausgebildet.

Zur Herstellung des Zahnersatzes wird in einem ersten Schritt das Implantat 10 durch Einschrauben im Knochen 22 verankert. Anschließend erfolgt ein Zunähen bzw. Verschließen des Zahnfleisches 42, so dass das Implantat 10 einwächst und fest mit dem Knochen 22 verbunden ist. Im nächsten Schritt erfolgt ein Öffnen des Zahnfleisches 42, da das Implantat 10 einen Implantatkopf 25 aufweist, der oberhalb des Kieferknochens 22 innerhalb des Zahnfleisches 42 angeordnet ist, muss das Zahnfleisch nicht bis zum Knochen geöffnet werden. Alternativ könnte das Zwischenelement mit einer provisorischen Krone außerhalb von mesiodistalen und okklusalem Kontakt bereits nach der Implantatinsertation aufgeschraubt und das Zahnfleisch drumherum zugenäht werden. Dies hat den Vorteil, dass bei einer späteren prothetischen Versorgung eine bereits anatomisch richtig ausgeformte Zahnfleischalveole ausgebildet ist.

Bei Frontzähnen erfolgt anschließend ein Fixieren des Zwischenelements 12 mittels der Schraube 30 in dem Ansatz 26 des Implantatkopfes 25. Das Zwischenelement 12 wurde hierbei zuvor entsprechend insbesondere durch Schleifen bearbeitet und an die individuelle Zahnsituation angepasst. Anschließend wird das Zahnersatzelement 14 durch Verkleben auf das Zwischenelement 12 aufgesetzt. Wenn es sich bei dem Zahnersatzelement 14 um eine Krone oder dergleichen eines Frontzahns handelt, weist diese keine Öffnung 36 auf, da eine derartige Öffnung für die Schraube 30 aufgrund der Angulation von palatinal nicht anzubringen ist. Insofern wird bei einer Frontzahnsituation das Zahnersatzelement 14 durch Verkleben mittels Zement oder einem anderen Klebematerial auf dem Zwischenelement 12 aufgesetzt. Da der Spalt 44 zwischen dem Zwischenelement 12 und dem Zahnersatzelement 14 bei Frontzähnen nur geringfügig unterhalb einer Oberseite des Zahnfleisches angeordnet ist, kann überschüssiges Zementmaterial oder dergleichen auf einfache Weise entfernt werden, so dass keine Irritationen des Zahnfleisches auftreten.

Wenn es sich bei dem Zahnersatzelement 14 um eine Krone oder dergleichen zum Ersatz eines Seitenzahns handelt weist das Zahnersatzelement 14 eine Öffnung 36 auf. Insofern ist es möglich, das Zahnersatzelement 14 außerhalb des Mundes durch Verkleben mit Hilfe von Zement oder einem anderen Klebematerial mit dem Zwischenelement 12 zu verkleben. Die im Bereich des Spalts 44 austretenden Zement- bzw. Klebematerialreste können entfernt werden, bevor das mit dem Zahnersatzelement 14 verbundene Zwischenelement 12 mit Hilfe der Schraube 30 in dem Ansatz 26 fixiert wird.

Das Zwischenelement 12 weist einen vorzugsweise umlaufenden Kragen 46 auf. Dieser weist eine vorzugsweise flache, ebene Unterseite 48 auf, die auf einer vorzugsweise flachen und ebenen Oberseite 50 des Implantatkopfes aufliegt. Beim Fixieren des Zwischenelements 12 mit Hilfe der Schraube 30 kann die Unterseite 48 gegen die Auflagefläche 50 gedrückt werden. Dies ist insbesondere spielfrei möglich, da das Material des Zwischenelements 12 eine gewisse Elastizität aufweist.

Das Fixierelement 30, das insbesondere als Schraube ausgebildet ist, weist einen Schaft 52, sowie einen Kopf 54 auf. An einer Unterseite des Kopfs 54 ist eine Einbuchtung 56 vorgesehen. Die Einbuchtung 56, die umlaufend ausgebildet ist, weist hierbei eine schräge Fläche 58 auf. Der schrägen Fläche 58 ist eine entsprechend schräg ausgebildete Fläche 60 gegenüberliegend am Halteelement 12 vorgesehen. Beim Anziehen der Schraube 30 treten somit im Wesentlichen nur in axiale Richtung und radial nach innen gerichtete Kräfte auf. Hierdurch ist sichergestellt, dass beim Anziehen der Schraube 30 das Zwischenelement 12 nicht beschädigt wird.

## Patentansprüche

1. Halteeinrichtung für Zahnersatzelemente, mit
einem Implantat (10) zur Fixierung in einem Kieferknochen (22),
wobei das Implantat (10) einen Implantatschaft (16) zur Anordnung im Kieferknochen (22) und einen Implantatkopf (25) zur Anordnung im Zahnfleisch (42) aufweist und
einem mit dem Implantatkopf (25) verbindbaren Zwischenelement (12) zur Aufnahme des Zahnersatzelements (14) und zur Anordnung zumindest im Wesentlichen innerhalb des Zahnfleisches (42).

2. Halteeinrichtung nach Anspruch 1, **dadurch gekennzeichnet, dass** das Zwischenelement (12) Material mit einer höheren Elastizität als das Implantat (10) und/oder das Zahnersatzelement (14) aufweist, insbesondere aus derartigem Material hergestellt ist.

3. Halteeinrichtung nach Anspruch 1 oder 2, **dadurch gekennzeichnet, dass** das Zwischenelement (12) dentalen Kunststoff oder dentale Keramik aufweist, insbesondere aus derartigem Material hergestellt ist.

4. Halteeinrichtung nach einem der Ansprüche 1 bis 3, **dadurch gekennzeichnet, dass** der Implantatkopf (25) einen Ansatz (26) aufweist, der in eine Ausnehmung (28) des Zwischenelements (12) ragt.

5. Halteeinrichtung nach Anspruch 4, **dadurch gekennzeichnet, dass** der Ansatz (26) des Implantatkopfes (25) bei mit dem Implantat (10) verbundenem Zwischenelement (12) insbesondere seitlich vollständig von dem Zwischenelement (12) umgeben ist.

6. Halteeinrichtung nach einem der Ansprüche 1 bis 5, **dadurch gekennzeichnet, dass** der Implantatschaft (16) des Implantats (10) rotationssymmetrisch ist.

7. Halteeinrichtung nach einem der Ansprüche 1 bis 6, **dadurch gekennzeichnet, dass** das Zwischenelement (12) einen insbesondere umlaufenden Kragen (46) mit einer insbesondere ebenen Unterseite (48) aufweist, die an einer insbesondere ringförmigen, den Ansatz (26) umgebenden Auflagefläche (50) des Implantatkopfes (25) anliegt.

8. Halteeinrichtung nach einem der Ansprüche 1 bis 6, **dadurch gekennzeichnet, dass** der Implantatschaft (16) an einer Außenseite (18) ein Gewinde (20) zum Einschrauben in den Kieferknochen (22) aufweist.

9. Halteeinrichtung nach einem der Ansprüche 4 bis 8, **dadurch gekennzeichnet, dass** der Ansatz (26) nicht rotationssymmetrisch ausgebildet ist und vorzugsweise zusätzlich als Werkzeugansatz dient.

10. Halteeinrichtung nach einem der Ansprüche 4 bis 9, **dadurch gekennzeichnet, dass** die Ausnehmung (28) des Zwischenelements (12) kongruent zum Ansatz (26) des Implantatkopfes (16) ausgebildet ist, wobei die Ausnehmung (28) und der Ansatz (26) insbesondere derart ausgebildet sind, dass diese formschlüssig miteinander verbindbar sind.

11. Halteeinrichtung nach einem der Ansprüche 1 bis 10, **dadurch gekennzeichnet, dass** das Zwischenelement (12) und das Implantat (10) mittels eines Fixierelements (30) verbunden sind, wobei das Fixierelement (30) insbesondere zur axialen Fixierung des Zwischenelements (12) dient.

12. Halteeinrichtung nach Anspruch 12, **dadurch gekennzeichnet, dass** das Fixierelement (30) in eine Öffnung (34) des Implantats (10) ragt, wobei die Öffnung (34) vorzugsweise im Ansatz (26) vorgesehen ist.

13. Halteeinrichtung nach einem der Ansprüche 1 bis 12, **dadurch gekennzeichnet, dass** das Zwischenelement (12) eine insbesondere mittig angeordnete Bohrung (32) zur Aufnahme des Fixierelements (30) aufweist, wobei die Bohrung (32) vorzugsweise als Durchgangsbohrung ausgebildet ist.

14. Halteeinrichtung nach einem der Ansprüche 11 bis 13, **dadurch gekennzeichnet, dass** das Fixierelement (30) einen Kopf (54) aufweist, dessen Unterseite (58) eine Einbuchtung (56) aufweist.

15. Halteeinrichtung nach Anspruch 13, **dadurch gekennzeichnet, dass** die Einbuchtung (56) durch eine an der Unterseite des Kopfes (54) nach innen in Richtung eines Schafts (52) verlaufenden schrägen Fläche (58) ausgebildet ist.

16. Zwischenelement für eine Halteeinrichtung nach einem der Ansprüche 1 bis 15 mit einer Ausnehmung (28) zur Aufnahme eins Ansatzes (26) eines Implantats (10).
